# EUROPEAN PATENT SPECIFICATION

(11) **EP 3 153 275 B1**
(45) Date of publication and mention of the grant of the patent: **31.08.2022**
(21) Application number: 16191434.6
(22) Date of filing: 29.09.2016
(51) Int. Cl.: B24B 3/55, A01F 29/22

(54) **GRINDING UNIT WITH A GRINDING HEAD COMPRISING A SHAFT AND A SHAFT GUIDING ASSEMBLY**
SCHLEIFEINHEIT MIT EINEM SCHLEIFKOPF MIT EINER WELLE UND WELLENFÜHRUNGSANORDNUNG
UNITÉ D'AFFÛTAGE AYANT UNE TÊTE D'AFFÛTAGE COMPRENANT UN ARBRE ET UN ENSEMBLE DE GUIDAGE D'ARBRE

(30) Priority: 05.10.2015 NL 2015562
(43) Date of publication of application: 12.04.2017
(73) Proprietor: Forage Company B.V., 3147 PB Maassluis (NL)
(72) Inventor: DREIER, Thomas, 3147 PB Maassluis (NL)
(74) Representative: AGCO Intellectual Property Department

(56) References cited:
- DE-A1- 10 352 328
- US-A1- 2007 184 760
- US-B1- 6 942 553

## Description

### FIELD OF THE INVENTION

The invention refers to a grinding unit with a grinding head for grinding at least one knife, in particular a sequence of knives belonging to a cutting assembly of an agricultural harvester.

### BACKGROUND OF THE INVENTION

The task of grinding a set of knives often occurs in the domain of agriculture. A modern harvester, e.g. a baler or a loader wagon or a field chopper, comprises a cutting assembly with a sequence of knives. The harvester picks up crop material from the ground and conveys the picked-up crop material through a feeding channel towards a processing or loading chamber. The knives engage into the feeding channel and cut the conveyed crop material. From time to time it is necessary to grind the knives, i.e. to sharpen their cutting edges. Different approaches how to do so have been published.

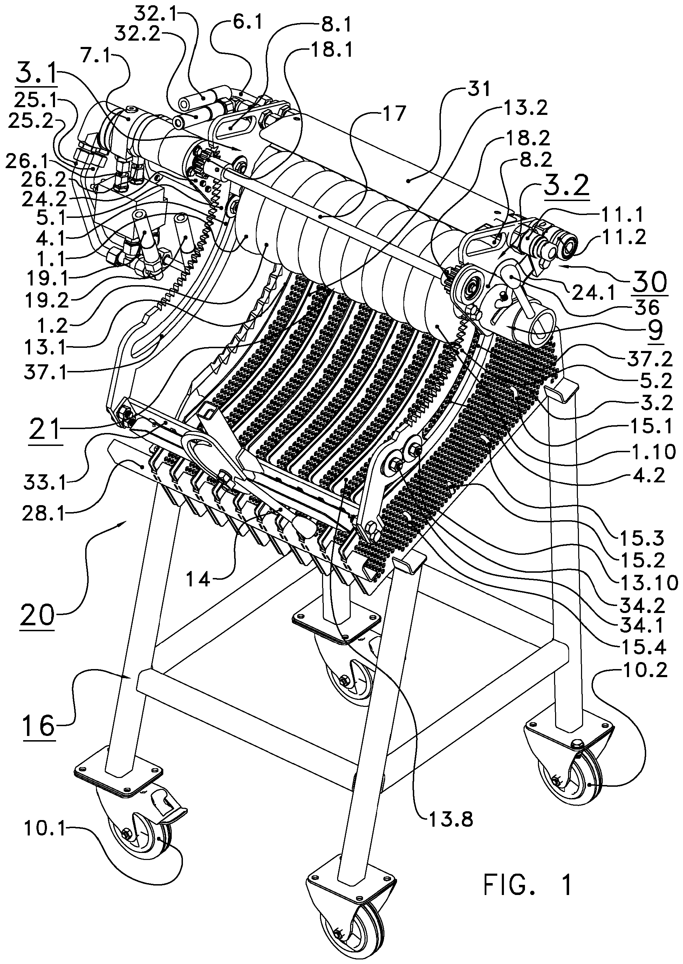

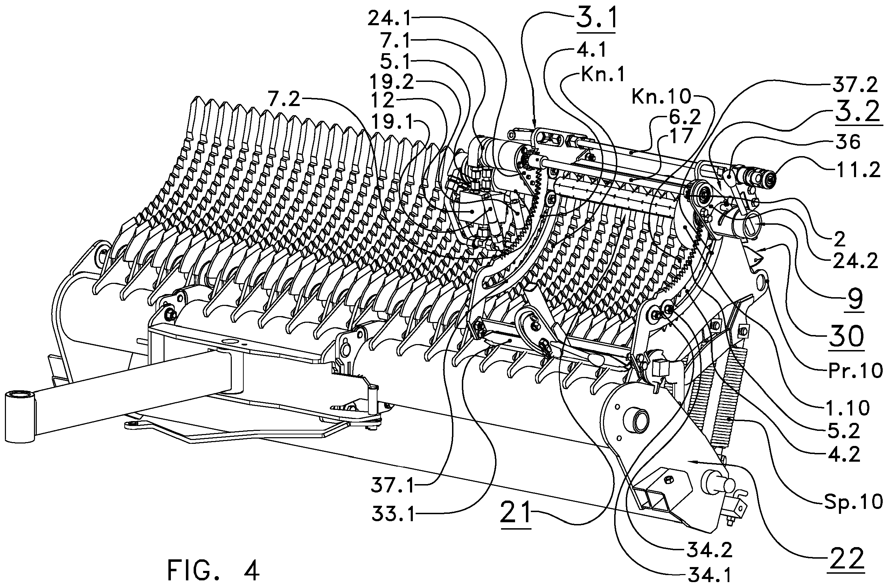

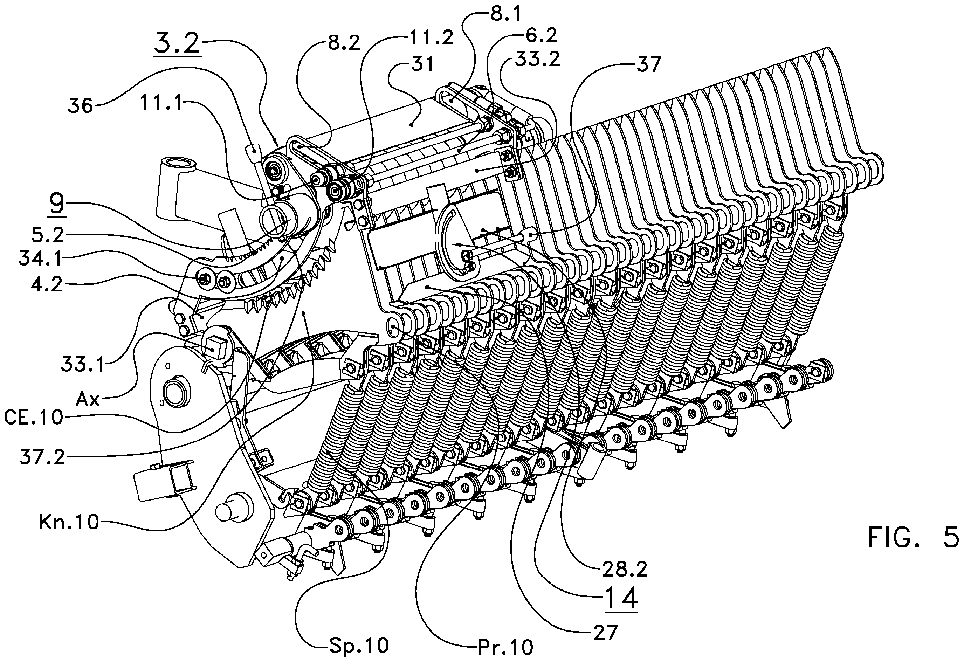

US 20070184760 A1 discloses a lawn mower blade sharpener. The mower comprises a reel 101 which can rotate around the axis 111, cf. Fig. 1 and Fig. 5. A grinding wheel 310 is mounted at a carriage 312. A powering device 320 rotates the grinding wheel 310 around the axis 318, cf. Fig. 4. The carriage 312 carrying the grinding wheel 310 is guided along the railway 306 which defines a path of linear translation 314 for the grinding wheel 310. A powering device 640 linearly translates the grinding wheel 310 along the railway 306, cf. Fig. 6.

DE 10352328 A1 (which forms the basis for the preamble of claim 1) discloses a device for grinding a knife (Messerschleifmaschine 1). A grinding disc (Schleifscheibe 20) of a grinding tool (Scheibenschleifer 19) contacts and grinds a knife (Messer 4) which is kept in a vertical position in a knife holder (Einspannvorrichtung 12). A drive (Schleifantrieb 21) rotates the grinding disc 20. The grinding tool 19 is mounted on the free end of a pivoting arm (Schwenkarm 23). For adjusting the grinding disc 20 the grinding tool 19 can be pivoted with respect to the pivoting arm 23 around an axis 24. The pivoting arm 23 can rotate around an axis 27 being perpendicular to the pivoting arm axis, cf. Fig. 4. A drive (Schwenkarmantrieb 35) can oscillate the arm 23 around the axis 27. Thanks to a carrier (Schwenkarm-Tragstück 28) the distance between the grinding tool 19 and the axis 27 and therefore the lever arm length (effective Pendellänge des Schwenkarms 23) can be adjusted. In addition the axis 27 can be adjusted in a vertical as well as in a horizontal direction. On the one hand a bearing (Lagerbock 30) carries the axis 27 and can be shifted horizontally on a carrying arm (Tragarm 31). On the other hand the carrying arm 31 can be shifted vertically along a stationary guiding element (Führung 32).

US 2729121 discloses a disc sharpening apparatus which can selectively be used as a portable or as a stationary disc sharpener. Rollers 138 and 140 are mounted on shafts 134 and 136 and can sharpen a disc D. The shafts 134, 136 are mounted on a support 72 which is supported by a subframe 56. The subframe 56 is mounted on a main frame 10. When being used as a stationary device a disc D to be sharpened is mounted on a shaft 198 which is kept by the subframe 56, cf. Fig. 16. When being used as a portable device, the main frame 10 is moved by means of rollers 206 and rails 208 placed on the ground, cf. Fig. 4. By means of a lever 158 the rollers 138,140 can be moved up to the discs D to be sharpened, cf. Fig. 1. The screw 106 applies pressure on the rollers 138, 140.

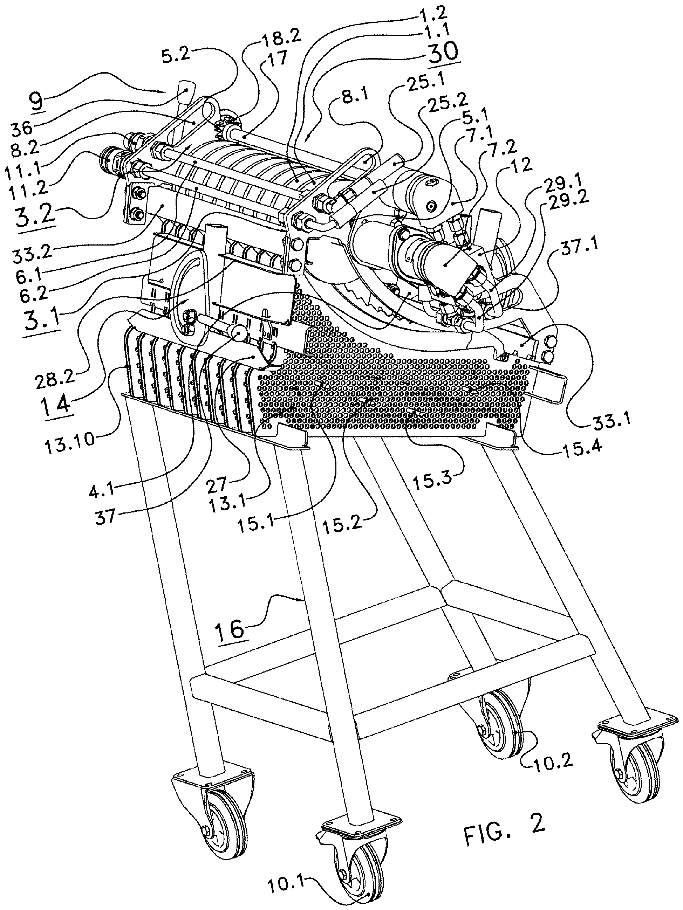

US 20120052776 A1 discloses a blade sharpening system for an agricultural implement, e.g. a vertical tilling implement 10 with a gang 40 of concave-shaped blades 22, cf. Fig. 1. A blade sharpening system 38 can be mounted on the gang 40, cf. Fig. 2. A sharpening assembly 50 sharpens the edge 54 of a blade 22. A sharpener 60 engages the blade 22 currently to be sharpened. A drive unit 52 rotates the blade 22 to be sharpened. The sharpening assembly 50 can move along a rail 56 in two opposite directions 66 and 68. For moving the sharpening assembly 50 from one blade 22 to a further blade, an operator lifts a handle 76 upwards. A screw 80 can lock the movement of the sharpening assembly 50 along the rail 56.

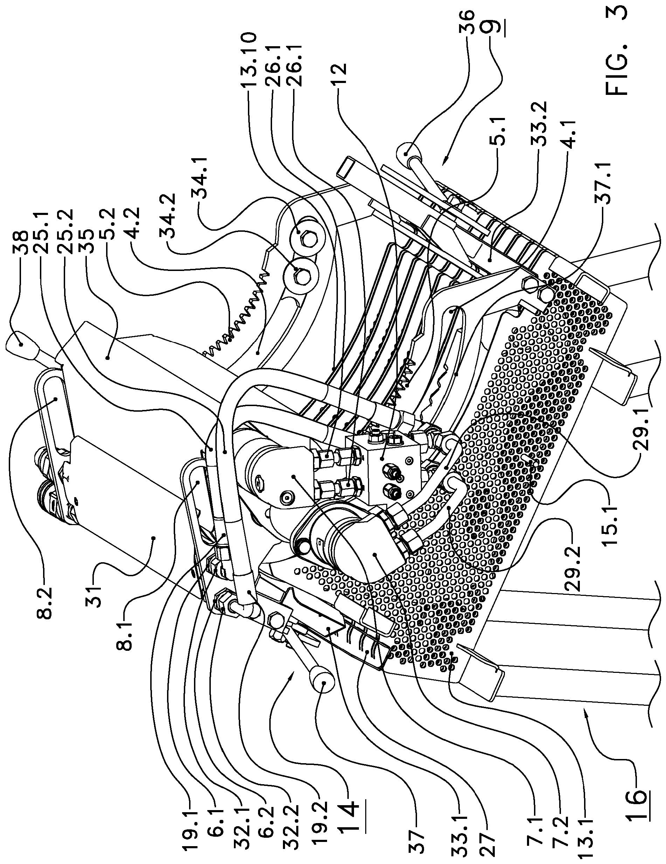

The portable automated sharpening apparatus 10 of US 6942553 B1 sharpens a blade by means of a sharpening assembly 12 with at least one sharpening element 14, cf. Fig. 2. A sharpening motor 16 can rotate the sharpening element 14 around the axis 17, cf. Fig. 1 and Fig. 3. The axis 17 can be parallel to the reel blade axis RBA, cf. Fig. 1. A drive assembly 30 with a drive motor 32 can move the sharpening element 14 along a drive path 36. The sharpening apparatus 10 can removable be interconnected to a reel blade mechanism by means of a support assembly 20.

EP 2810738 A1 discloses a device for grinding at least one knife 26. A motor 3 drives a grinding stone (Schleifstein 2). The grinding member (Schleifeinheit 1) with the grinding stone 2 and the motor 3 is mounted on a carrying arm 5. A guiding element 4 for the grinding member 1 engages into apertures (Aussparungen 8) of a template (Schablone 7). This template 7 determines the trajectory or contour along which the grinding member 1 is moved. The knife 26 to be ground rests on a supporting plane (Auflagefläche 12) and contacts a movement limiting element (Messeranlage 11). The cutting edge of a knife 26 to be ground contacts the movement limiting element 11. The knife 26 is kept in a position by the stop element 11 and by a lateral limiting element 14. Every knife 26 is clamped between the supporting plane 12 and an opposing element (Gegenstück 16).

EP 1621065 B2 discloses a loader wagon (Ladewagen 1) which picks up loose crop material from the ground and conveys the picked-up crop material through a feeding channel (Forderkanal 6) to a loading chamber. Conveying tines (Förderzinken 7) engage from above into the feeding channel 6 and correspond with cutting knives (Schneidmesser 8, 9), cf. Fig. 1. The knives 8 can be pivoted from an engaging cutting position (Fig. 1) into a non-engaging maintenance position (Fig. 2). When the knives 8 are in the maintenance position, a sharpening device (Schärfeinrichtung 10) mounted on board of the loader wagon 1 can grind the knives 8 by means of several sharpening bodies (Schärfkörper 14). A drive (Antriebseinrichtung 18) with a positioning member (Stellglied 19) oscillates the sharpening body 14 along the cutting edges (Schneidkanten 12) of the knives 8.

EP 2272318 B1 discloses an agricultural harvester (Erntemaschine) which picks up crop material (Erntegut) from the ground and conveys the picked-up crop material through a feeding channel (Forderkanal 9). A cutting assembly (Schneidvorrichtung 10) with several knives (Messer 12) cuts the crop material while it is conveyed through a feeding channel 9. The harvester further comprises a grinding device (Schleifvorrichtung 13) for grinding the knives 12. A positioning motor (Stellantrieb) and a guiding device (Schleiferführung 15) guides the grinding body (Schleifer 14) along the cutting edge of a knife 12. On the one hand the grinding body 14 is mounted at a traversal slide (Querschlitten 17) and can be moved perpendicular to the conveying direction of the crop material. On the other hand the grinding body 14 is mounted at a parallel slide (Längsschlitten 18) such that the grinding body 14 can be moved along the cutting edge of a knife to be ground.

DE 202004009498 U1 discloses a grinding device with a magazine (Werkstückmagazin 2). The knives (Schneidmesser 3) to be ground are kept by this magazine 2. Several knives 3 can be kept one above the other in the magazine 2, cf. Fig. 1. A grinding unit (Schleifeinheit 13) can be moved up and down with respect to the magazine and comprises a grinding head (Schleifkopf 17) and a drive (Schwenkantrieb 18) for the grinding head 17.

US 939115 discloses a portable grinding device for grinding disc-shaped knives. Fig. 1 shows a shaft 4 with three discs 2 of a harrow. Three grinding bodies each 35 having the shape of a disc and a conical extension are mounted on a driven shaft 25. A chain drive transfers a rotation of the knives shaft 4 onto the grinding shaft 25.

GB 2144030 A discloses a loader wagon with a pivotal cutting assembly and a grinding device. Fig. 1 shows two cutting blades 7 and 8. Fig. 2 shows a grinding device 23 for these blades 7, 8. The grinding device 23 comprises a grinding disc 28 mounted on a pivotal bar 26. This bar 26 is mounted on a traversal bearing 25 which is mounted on a transversal tube 24. A motor 27 drives the grinding disc 21 and is also mounted on the pivotal bar 26. The top view of Fig. 3 shows the inclined position of the grinding device 23 with respect to the blades 7 to be ground.

### SUMMARY OF THE INVENTION

A problem solved by the invention is to provide a grinding unit with the features of the preamble of claim 1 wherein the grinding unit provides an easy and robust mechanical construction for guiding the rotated and shifted grinding head along the knives to be ground.

This problem is solved by a grinding unit with the features of claim 1. Preferred embodiments are specified in the depending claims.

The grinding unit according to the invention comprises
- a grinding head with a shaft and at least one grinding body,
- a grinding head holder,
- a guiding assembly providing at least one shaft guiding surface,
- a grinding head rotating drive, and
- a grinding head shifting drive.

The or every grinding body is mounted on the shaft. The shaft extends along a shaft axis. The or every grinding body is arranged to touch at least one knife to be ground. A relative movement between the grinding body and the knife causes a touched cutting edge of the knife to be sharpened.

The grinding head holder holds the grinding head. The grinding head can be rotated and shifted with respect to the grinding head holder.

The grinding head rotating drive rotates the shaft with respect to the grinding head holder around the shaft axis. Therefore the or every grinding body is rotated. The grinding head shifting drive shifts the rotated shaft with respect to the grinding head holder in at least one direction perpendicular to the shaft axis. Therefore the or every grinding body is shifted perpendicular to the shaft axis.

The guiding assembly guides the shifted and rotated grinding head with respect to the grinding head holder along a given trajectory. For doing so, the shaft stays in contact with the or at least one shaft guiding surface while being rotated and shifted. The or every shaft guiding surface limits a possible movement of the shaft in a direction perpendicular to the shaft axis and perpendicular or angular to the shifting direction in which the shaft is shifted, thereby reducing the possible shaft movement to the given trajectory. The or every shaft guiding surface guides the contacted shaft with respect to the grinding head holder along the given trajectory.

### ADVANTAGES

According to the invention the or every grinding body of the grinding head is not only rotated but also shifted with respect to the grinding head holder. Thereby the or one grinding body is moved with respect to a knife and can sharpen a cutting edge of this knife also if the knife remains its position with respect to the grinding head holder. It is not necessary to move a knife to be ground. In particular the knife needs not to be moved with respect to the grinding head holder.

According to the invention the rotated and shifted shaft is guided with respect to the grinding head holder along the given trajectory. As the grinding head is rotated by moving and shifted the guided shaft, the grinding head is moved according to the given trajectory with respect to the grinding head holder. The guiding assembly is adapted to guide the grinding head along the touched cutting edge of at least one knife to be ground. Thereby the grinding head is moved along the cutting edges.

When constructing the guiding assembly for the grinding unit, the or every provided shaft guiding surface can be constructed such that the achieved trajectory is adapted to the cutting edge. It is possible but thanks to the invention not necessary to adapt the grinding head rotating drive or the grinding head shifting drive to the cutting edge of the knife to be ground. This makes it easier to adapt the grinding unit to different cutting edge shapes. Thanks to the invention it is possible but not necessary to guide further parts of the grinding unit during operation, in particular not the drives. Nevertheless the grinding head can follow the cutting edge to be sharpened.

According to the invention the grinding unit comprises two different drives:
- a grinding head rotating drive and
- a grinding head shifting drive.

It suffices that both drives causes basic movements of the shaft, namely:
- the rotating drive a rotation and
- the shifting drive a linear movement of the shaft, resp.

It is not necessary that the rotating drive shifts or the shifting drive rotates the shaft.

The or every shaft guiding surface has the function of guiding the rotated and shifted shaft. The guiding assembly does not necessarily rotate or move the shaft with respect to the grinding head holder. Therefore the shaft guiding assembly can be implemented as a purely passive mechanical part without a moving or moved element. Thanks to the invention a guiding or guided member, in particular a lever arm for a drive is saved. In particular it is not necessary that the grinding head is substantially carried by a moved lever arm. Therefore the invention leads to a robust mechanical construction. The risk of a mechanical failure is reduced.

A defined trajectory followed by the grinding head is achieved as at least one shaft guiding surface of the guiding assembly guides the rotated and shifted shaft of the grinding head along the given trajectory. The guiding assembly can be implemented as a purely mechanical part, e.g. by at least one longitudinal guiding slot or guiding edge contacting the shaft. Therefore both grinding head drives can be implemented in a simple way. They need not to be adapted to the shape of a cutting edge to be ground. In addition no grinding head drive requires a lever arm which guides the grinding head along the knives and therefore requires only little space.

Thanks to the invention it is also not necessary that the grinding head shifting drive is guided depending on signals from a sensor which measures the shape of a cutting edge to be sharpened. The shaft movement is restricted by the or one guiding surface.

The grinding body is rigidly mounted on the shaft. In a preferred embodiment the or every grinding body can be shifted with respect to the grinding head holder in a direction parallel to the shaft axis. Thereby the or every grinding disc can be adjusted with respect to a knife to be ground.

Preferably a distance between the grinding head rotating drive and the grinding head shifting drive occurs. In one embodiment the rotating drive is mounted on the shaft and the shifting drive is positioned with a distance to the shaft. Both drives can be adapted to a specific function, namely rotating and shifting the shaft, resp. In one embodiment the grinding head rotating drive changes its relative position with respect to the grinding head shifting drive while the shaft is rotated and shifted. It is also possible, however, that the same device operates as the rotating drive as well as the shifting drive.

The grinding head holder provides the or one shaft guiding surface which guides the shaft. Preferably the or one shaft guiding surface does not only guide but also carries and supports the grinding head. Thereby the weight of the grinding head is mainly taken by the grinding head holder and not by a drive or by a transmission member connecting the drive with the grinding head.

The or at least one shaft guiding surface is provided by at least one longitudinal slot inserted into the grinding head holder. Preferably the shape of the or every guiding slot is adapted to the shape of the cutting edges to be sharpened.

In one embodiment at least two different grinding head holders are provided. The grinding unit is selectively operated with the first or the second grinding head holder. The other parts of the grinding unit can be re-used, in particular the grinding head and the drives. Every grinding head holder provides at least one shaft guiding surface causing the shifted shaft to be moved along a specific trajectory. The first trajectory differs from the second trajectory. Thereby the same grinding unit can easily be adapted to different cutting edge shapes. It is not necessary to adapt the grinding unit to a knife by moving the knife with respect to the grinding head holder while the knife is ground. It is further not necessary to move the shaft in a direction perpendicular to the or one guiding surface.

In one embodiment the grinding head shifting drive directly shifts the guided shaft. In a preferred embodiment, however, the grinding head shifting drive moves a movable transmission member. The moved movable transmission member transfers the enforced movement onto the shaft by means of a mechanical coupling member. Thereby the rotated and guided shaft is shifted in a direction perpendicular to the shaft axis. This embodiment further simplifies the construction of the drives. The grinding head shifting drive can be positioned in a sufficiently large distance to the shaft. Thanks to this embodiment it is easily possible to mount the shifting drive and the rotating drive on or adjacent to the same side of the shaft. This feature makes it easier to supply both drives with hydraulic or pneumatic fluid or energy.

In addition the embodiment with the transmission member makes it easier to place a biasing element which biases the grinding head against knives to be ground. This biasing element can be connected with the shaft and in a way that the biasing element neither contacts the movable transmission member nor the mechanical coupling member. Therefore this biasing element does not restrict the operation of the grinding head shifting drive while it moves the movable transmission member.

In one implementation the guiding head shifting drive causes a purely rotational movement of a part of the movable transmission member. This rotational movement causes a shift of the shaft.

In a very simple and robust implementation of the movable transmission member the grinding head shifting drive rotates at least one sprocket wheel. The or every rotated sprocket wheel of the transmission member is mounted on a wheel shaft and engages a serrated edge of the grinding head holder. In one implementation the shifting drive rotates the wheel shaft. Preferably this serrated edge is parallel to the or one shaft guiding surface such that the distance between the wheel shaft for the sprocket wheel and the serrated edge remains constant while the shaft is moved. The wheel shaft and the or every sprocket wheel on the wheel shaft belong to the movable transmission member. A distance between the wheel shaft and the rotated shaft of the grinding head occurs. The rotation of the or every sprocket wheel causes the sprocket wheel and thereby the wheel shaft to move with respect to the grinding head holder. A mechanical coupling member transfers the movement of the wheel shaft with the sprocket wheel onto the shaft of the grinding head. Thereby the shaft with the grinding discs is pulled and shifted with respect to the grinding head holder. This implementation only requires a drive which can rotate the sprocket wheel, e.g. a drive which is mounted on the wheel shaft for the sprocket wheel and rotates the wheel shaft. The required trajectory is achieved by the or one shaft guiding surface. The transmission member can be implemented independently from this trajectory. The same transmission member can subsequently be used for grinding knives with different cutting edge shapes.

Preferably the grinding head shifting drive rotates the wheel shaft. The or every sprocket wheel engaging a serrated edge is rigidly mounted on the wheel shaft. The moved wheel shaft is moved along the or every serrated edge of the grinding head holder. In one implementation two sprocket wheels are mounted on the wheel shaft. These two sprocket wheels engage two parallel serrated edges of the grinding head holder. Preferably the or every grinding disc is positioned between the serrated edges.

Preferably the grinding head shifting drive is mechanically connected with the movable transmission member and is moved together with the movable transmission member. In one implementation the grinding head shifting drive is mounted on the wheel shaft, e.g. on one lateral end. This embodiment enables a compact implementation and requires little space. It suffices that the grinding head shifting drive is supplied with energy or fluid via suitable flexible lines or hoses.

In a preferred embodiment both drives are positioned on the same side of the grinding head. Seen in a direction perpendicular to the shaft axis both drives are either positioned left of the or every grinding body or right of the or every grinding body. This embodiment makes it easier to supply the drives with fluid or energy by using suitable lines.

In one embodiment an entire grinding assembly is moved and guided along the given trajectory. This grinding assembly comprises the grinding head and both drives, if required lines for supplying the drives, and in one implementation the movable transmission member. This embodiment enables a compact implementation and requires little space. The distance between the drives and the grinding head can be made very short.

The grinding head drives can be implemented as electric, hydraulic, or pneumatic motors, e.g. It is possible that two different kinds of drives are used, one for the rotating drive and one for the shifting drive.

In one embodiment the grinding head holder is connected or can temporarily be connected with a knife holder. Thereby the grinding unit according to the invention is or can be connected with the frame. This knife holder holds at least one knife to be ground and carries the grinding unit. Preferably the grinding head holder does not perform a movement with respect to the or every knife held by the knife holder, i.e. keeps its position with respect to the knife, while being connected with the knife holder. In one implementation the knife holder belongs to a frame with a chassis carrying at least one ground-engaging wheel. The frame with the grinding unit can be moved over ground. In one embodiment the grinding unit is portable. The portable grinding unit can be connected with the knife holder, e.g. by placing the grinding unit on the frame. This connection can be released again.

In a further embodiment the grinding unit is mounted on board of a vehicle, e.g. a harvester, comprising a cutting assembly. Also in this embodiment the grinding head holder keeps its position with respect to the or at least some harvester's knives to be ground.

It is also possible that the grinding unit can releasably be connected with the knife holder and can in addition be removed from the knife holder and be placed onto the cutting assembly comprising several knives to be ground, e.g. onto the cutting assembly of an agricultural harvester. Thanks to this embodiment the same grinding unit can consecutively grind several different knives.

Preferably the grinding unit comprises a sequence of grinding bodies, e.g. of grinding discs, mounted on the shaft. Therefore the grinding unit can simultaneously grind several knives, e.g. all or at least several knives of the cutting assembly of an agricultural harvester or several knives kept in a knife holder.

These and other aspects of the invention and of the preferred embodiment will be even more apparent from the detailed embodiment as described below and will be elucidated in detail there.

### BRIEF DESCRIPTION OF THE DRAWINGS

Fig. 1 shows the grinding device of the embodiment with the grinding unit placed on the frame (off-board operating mode) with the grinding discs and the horizontal adjustment device pointing to the observer;
Fig. 2 shows the grinding device of Fig. 1 with the hydraulic motors pointing to the observer;
Fig. 3 shows in detail the hydraulic system for supplying the hydraulic motors of the grinding device of Fig. 1;
Fig. 4 shows the grinding device with the grinding unit placed onto the cutting assembly of a loader wagon (on-board operating mode) with the grinding head pointed to the observer;
Fig. 5 shows the grinding unit of Fig. 4 with the vertical adjustment device pointing to the observer.

### DETAILED DESCRIPTION OF EMBODIMENT

In the embodiment the grinding device according to the invention is used for simultaneously grinding several (in the embodiment: maximal ten) knives of an agricultural harvester, e.g. of a loader wagon or a baler. The knives to be ground belong to a cutting assembly mounted on board of the harvester. The cutting assembly which is mounted on board of the harvester and cuts picked-up or otherwise received crop material while the crop material is conveyed through a feeding channel.

The grinding device of the embodiment comprises
- a grinding unit with a grinding head and
- a frame comprising a knife holder and a chassis with four ground-engaging wheels.

The grinding unit can selectively be connected with the frame or can be disconnected from the frame and placed onto the cutting assembly of the harvester.

When the grinding unit is positioned on the frame with the knife holder, the grinding head can simultaneously grind several knives which are removed from the harvester - or from a further harvester - or just manufactured and are kept by the knife holder (off-board operating mode). The grinding unit can also be removed from the frame and can be placed onto the cutting assembly of the harvester and can simultaneously grind several knives of this cutting assembly (on-board operating mode). The frame is not used when the grinding device is used in the on-board operating mode and is placed on the cutting assembly.

Fig. 1 to Fig. 3 show the grinding device being in the off-board operating mode. Fig. 4 and Fig. 5 show the grinding unit of the grinding device being in the on-board operating mode.

Fig. 1 to Fig. 5 show the grinding unit 30 of the grinding device. Fig. 1 to Fig. 3 further show the frame 20 carrying the grinding unit 30. Fig. 4 and Fig. 5 show several knives Kn.1, Kn.2, ... to be ground and belonging to the cutting assembly of a loader wagon.

The grinding unit 30 is implemented as a portable unit and comprises
- a grinding head 21,
- a grinding head holder with two parallel grinding head holder members 3.1, 3.2, and
- a hydraulic drive assembly with two hydraulic motors 7.1, 7.2 serving as two grinding head drives and forming the grinding head assembly of the embodiment.

The grinding head 21 comprises
- a shaft 2 extending along a shaft axis and
- a sequence of ten grinding discs 1.1, 1.2, ... which are mounted on the shaft 2.

The grinding head holder members 3.1, 3.2 are rigidly connected with each other by means of two transversal beams 33.1, 33.2. A pivotal cover 35 (only shown in Fig. 3) covers the grinding head 21. The shaft 2 and thereby the grinding discs 1.1, 1.2, ... can rotate with respect to the grinding head holder 3.1, 3.2, 33.1, 33.2 around the shaft axis. The grinding head holder members 3.1, 3.2 carry the shaft 2 and thereby the grinding discs 1.1, 1.2, .... The grinding discs 1.1, 1.2, ... are positioned between the grinding head holder members 3.1 and 3.2. The shaft 2 protrudes in both directions beyond both holder members 3.1 and 3.2.

Preferably at least one spring (not shown) biases the shaft 2 in a direction parallel to the shaft axis against the knives to be ground. In one implementation every grinding disc 1.1, 1.2, ... is rigidly mounted on the shaft 2. The shaft 2 together with the grinding discs 1.1, 1.2, ... can be moved parallel to the shaft axis.

In an alternative implementation every grinding disc 1.1, 1.2, ... can be moved with respect to the shaft 2 parallel to the shaft axis against a knife and can be biased independently from the other grinding discs. One assigned spring biases this grinding disc 1.1, 1.2, ... against the knife adjacent to this grinding disc. It is possible that the grinding discs 1.1, 1.2, ... are mounted on a joint sleeve. It is further possible that every grinding disc 1.1, 1.2, ... is mounted on an own sleeve. The or every sleeve surrounds the shaft 2.

In the embodiment every knife Kn.1, Kn.2, ... to be ground has an approximately triangular shape with exactly one curved cutting edge. This cutting edge CE.1, ..., CE.10 can best be seen in Fig. 5. It is also possible to grind at least one knife comprising several curved cutting edges or a disc-shaped knife. In particular the same grinding device can also grind knives each comprising two cutting edges with coinciding shapes and dimensions. In a first step the first cutting edge is sharpened and in a subsequent second step the other cutting edge is sharpened. The knives with several cutting edges can be on board of the harvester or held by the knife holder.

A knife Kn.1, Kn.2, ... is not moved with respect to the grinding head holder 3.1, 3.2, 33.1, 33.2 while being ground. While sharpening a cutting edge, the shaft 2 and thereby the grinding discs 1.1., 1.2, ... are rotated. In addition the rotated grinding head 21 performs an oscillating movement with respect to the grinding head holder 3.1, 3.2, 33.1, 33.2 along a curved trajectory which is adapted to the shape of the cutting edge CE.1, ..., CE.10 of a knife Kn.1, ..., Kn.10 to be ground.

It is possible that the curved trajectory is defined by two upper edges of the grinding head holder members 3.1, 3.2. In the embodiment, however, this guided movement of the grinding head 21 along this curved trajectory is caused as follows: In every grinding head holder member 3.1, 3.2 a longitudinal curved slot 4.1, 4.2 is inserted. Every slot 4.1, 4.2 comprises a curved lower edge 37.1, 37.2 serving as a shaft guiding surface. The slots 4.1, 4.2 have a coinciding shape and dimension which are adapted to the coinciding shape and dimension of the cutting edges to be sharpened. The shaft 2 is positioned between the members 3.1, 3.2 and protrudes through both curved slots 4.1, 4.2. These slots 4.1, 4.2 restrict the possible movements of the shaft 2 with respect to the grinding head holder 3.1, 3.2, 33.1, 33.2 onto the required curved trajectory between two slot ends. The shaft 2 rests on both shaft guiding surfaces 37.1, 37.2. In particular the shaft 2 cannot move in a vertical direction.

In one implementation the shaft 2 can move from one slot end to the other slot end. In a preferred implementation two trajectory reducing elements 34.1, 34.2 (Fig. 3) can be inserted into the two guiding slots 4.1, 4.2 adjacent to one slot end. Fig. 1, Fig. 3, and Fig. 4 show two trajectory reducing elements 34.1, 34.2 in the slot 4.2. Corresponding trajectory reducing elements may be inserted in the other slot 4.1. These trajectory reducing elements 34.1, 34.2 reduce the provided free length of the slots 4.1, 4.2 and thereby the trajectory of a shaft 2 while the shaft 2 is rotated and shifted and is guided along the slots 4.1, 4.2. Thanks to these reducing elements 34.1, 34.2 the grinding unit 30 can simply be adapted to different lengths of the respective cutting edges of different knives: The grinding unit 30 is selectively be operated with or without trajectory reducing elements 34.1, 34.2.

A further means to adjust the grinding unit 30 to several different cutting edge shapes is as follows: At least two pairs of grinding head holder members 3.1, 3.2 are provided. The pairs distinguish from each other by slots 4.1, 4.2 with different shapes and/or dimension. For changing the trajectory which the rotated and shifted shaft 2 follows during operation, a further pair of two grinding head holder members is used and mounted into the grinding unit 30 in place of a first pair. The other parts of the grinding unit 30, in particular the grinding head 21 and the drive assembly, can be reduced.

The grinding unit 30 comprises two hydraulic motors 7.1, 7.2 which can best be seen in Fig. 2 and Fig. 3. A distance between these hydraulic motors 7.1, 7.2 occurs. In Fig. 2 and Fig. 3 the motors 7.1 and 7.2 point to the observer.

The hydraulic motor 7.2 rotates the shaft 2 around the shaft axis, e.g. the middle axis of the shaft 2, and serves as the grinding head rotating drive. Thereby the grinding discs 1.1, 1.2, ... are rotated around this shaft axis. Every grinding disc 1.1, 1.2, ... - or at least one disc - contacts a cutting edge of a knife Kn.1, Kn.2, ... to be ground. The grinding disc grinds and sharpens this cutting edge. In the embodiment the motor 7.2 is mounted on an end of the shaft 2 and is moved together with the shaft 2 along the slots 4.1, 4.2.

The other hydraulic motor 7.1 serves as the grinding head shifting drive. The motor 7.1 causes the rotated and guided shaft 2 to be shifted with respect to the grinding head holder members 3.1, 3.2 in a direction perpendicular to the shaft axis. Thereby the motor 7.1 causes the shaft 2 to perform the desired oscillating movement along a trajectory as defined by the longitudinal slots 4.1, 4.2.

Different implementations how the motor 7.1 shifts the shaft 2 are possible. In one implementation the motor 7.1 is also mounted on one end of the shaft 2. An alternative implementation is described in the following and shown in the figures: The hydraulic motor 7.1 rotates a traversal bar 17 which can best be seen in Fig. 1. This traversal bar 17 is positioned parallel to the shaft 2, is mounted angularly above the grinding head 21, and serves as a wheel shaft for moving the shaft 2. Two sprocket wheels 18.1, 18.2 are rigidly mounted on this traversal bar 17. Every sprocket wheel 18.1, 18.2 engages a corresponding curved serrated edge 5.1, 5.2. Every serrated edge 5.1, 5.2 forms the upper edge of a grinding head holder member 3.1 or 3.2 and is positioned parallel to the slot 4.1, 4.2 in this member 3.1 or 3.2. Rotating the traversal bar 17 causes both sprocket wheels 18.1 and 18.2 to be rotated such that the traversal bar 17 is moved along the serrated edge 5.1, 5.2 without counting. The traversal bar 17 performs an oscillating movement along the serrated edges 5.1 and 5.2. In a preferred implementation the hydraulic motor 7.1 is mounted at one end of the traversal bar 17 adjacent to the sprocket wheel 18.1and is moved together with the bar 17.

Two mechanical coupling elements 24.1, 24.2 connect the moved traversal bar 17 with the rotated shaft 2. In the embodiment every coupling element 24.1, 24.2 is implemented as a plate through which the traversal bar 17 and the shaft 2 are guided. The bar 17 as well as the shaft 2 can rotate with respect to the plate 24.1, 24.2 such that the shaft 2 can follow the trajectory given by the slots 4.1, 4.2 wherein a canting of the bar 17 or the shaft 2 is avoided.

Thanks to these mechanical coupling elements 24.1, 24.2 a movement of the traversal bar 17 along the serrated edges 5.1, 5.2 causes the rotated shaft 2 and the motor 7.2 to be shifted along the longitudinal slots 4.1, 4.2. The moved traversal bar 17 pulls or shifts the rotated and guided shaft 2 via the coupling elements 24.1, 24.2. It suffices that the motor 7.1 rotates the traversal bar 17. The trajectory for the shaft 2 is achieved by the slots 4.1, 4.2 which guide the moved shaft 2. The motor 7.1 needs not to be adapted to the trajectory.

Fig. 1, Fig. 2, and Fig. 3 further shows how the hydraulic motors 7.1, 7.2 are supplied with hydraulic fluid by using a hydraulic distributor 12. Every hydraulic motor 7.1, 7.2 is connected with this hydraulic distributor 12 by means of two parallel rigid fluid lines, one for every flow direction. The fluid lines 26.1, 26.2 connect the distributor 12 with the hydraulic motor 7.1. The fluid lines 29.1, 29.2 connect the distributor 12 with the hydraulic motor 7.2.

A source for pressurized hydraulic fluid can be mounted at the frame. In the embodiment, however, the source is positioned outside of the grinding unit, e.g. on board of a tractor or harvester or as a stationary device in a workshop. The hydraulic distributor 12 is supplied with hydraulic fluid as follows: The hydraulic distributor 12 is further connected with two elastic hoses 25.1, 25.2. The elastic hoses 25.1, 25.2 supply the distributor 12 and thereby the motors 7.1, 7.2 with fluid while the grinding head 21 oscillates along the slots 4.1, 4.2. These hoses 25.1, 25.2 are connected with two rigid fluid lines 6.1, 6.2. One fluid line 6.1 is used for guiding fluid from the source via the respective hose 25.1 to the distributor 12. The other fluid line 6.2 is used for guiding fluid away from the distributor 12 via the respective hose 25.2 back to the source. The rigid fluid lines 6.1, 6.2 are partially covered by a pivotal cover 31.

The connection between the hoses 25.1, 25.2 and the lines 6.1, 6.2 can be disconnected. Fig. 1 shows the disconnected state. Fig. 2 and Fig. 3 show the connected state. The hoses 25.1, 25.2 each have a rigid end piece 19.1, 19.2. The fluid lines 6.1, 6.2 each have a rigid end piece 32.1, 32.2. Every end piece 19.1, 19.2 can be connected with an end piece 32.1, 32.2.

The fluid line 6.1 ends in a rigid connector 11.1. The fluid line 6.2 ends in a rigid connector 11.2. For supplying the grinding unit 30 with fluid, further hoses (not part of the grinding device) can be connected with the hydraulic source and with these connectors 11.1, 11.2 as can best be seen in Fig. 4. The hydraulic source for the hydraulic motors 7.1, 7.2 can be positioned on board of a tractor pulling an agricultural harvester or on board of the agricultural harvester itself or on board of a stationary device which is operated in a workshop.

During operation both hydraulic motors 7.1, 7.2 are supplied with pressurized hydraulic fluid via the distributor 12. Preferably the hydraulic motor 7.2 continuously rotates the shaft 2 and thereby the grinding discs 1.1, 1.2 in one rotating direction, e.g. always with the same rotational speed. The hydraulic motor 7.1 is laterally mounted on the traversal bar 17, rotates the traversal bar 17 subsequently in both rotating directions and thereby causes the rotated shaft 2 to oscillate along the longitudinal slots 4.1, 4.2.

An entire grinding assembly performs the oscillating movement with respect to the grinding head holder 3.1, 3.2, 33.1, 33.2 along the guiding slots 4.1, 4.2 without a relative movement of one assembly part to a further assembly part. This grinding assembly comprises the following parts:
- the shaft 2,
- the grinding discs 1.1, 1.2, ... mounted on the shaft 2,
- the hydraulic motors 7.1, 7.2,
- the transversal bar 17,
- the sprocket wheels 18.1, 18.2 on the bar 17,
- the mechanical coupling elements 24.1, 24.2,
- the hydraulic distributor 12, and
- the rigid fluid lines 26.1, 26.2, 29.1, 29.2.

For causing an oscillating movement the hydraulic motor 7.1 rotates the traversal bar 17 with the sprocket wheels 18.1, 18.2 in one direction until the shaft 2 reaches one end of every slot 4.1 and 4.2. This event is automatically detected and causes the hydraulic motor 7.1 to rotate the bar 17 in the inverted direction.

Several implementations how to automatically detect the event that the shaft 2 has reached the slot end and to invert the rotating direction are possible:
- In one embodiment a contact switch is mounted near the end of a slot 4.1 and/or 4.2. The shaft 2 touches this contact switch. This event causes the hydraulic distributor 12 to invert the rotating direction of the transversal bar 17.
- In a further embodiment a pressure sequence valve or oscillating valve is mounted in the interior of the hydraulic distributor 12. This valve directs the hydraulic fluid into one rigid fluid line 26.1, 26.2 guiding from the distributor 12 to the hydraulic motor 7.1 until the shaft 2 reaches the slot end or a reducing element 34.1, 34.2. The other line 26.2, 26.1 guides fluid away from the hydraulic motor 7.1 to the hydraulic distributor 12 and from there back to the fluid source. As soon as the shaft 2 reaches the slot end, the hydraulic pressure significantly increases. This event causes the valve to direct the fluid into the other line, i.e. the two hydraulic lines 26.1 and 26.2 change their roles. The effect: The bar 17 is rotated in the opposite direction.

In place of hydraulic motors two electric motors can be used. The contact switch can trigger a rotation change of the electric motor for the traversal bar 17. An increase of electric power consumption can be measured and used for triggering the inversion of the rotating direction.

During operation the grinding unit 30 rests on a foot 27 formed by two parallel L-shaped lower transversal beams which can best be seen in Fig. 3 and Fig. 5. This foot 27 is mechanically connected with two upper transversal beams 28.1, 28.2. Every upper transversal beam 28.1, 28.2 is rigidly connected with both grinding head holder members 3.1, 3.2. Preferably the foot 27 is implemented as a slide such that the position of the entire grinding unit 30 with respect to a cutting assembly 22 or to the frame 20 can be adjusted in a horizontal direction by shifting the grinding unit 30 with the slide 27 in a horizontal direction.

The vertical height of the grinding unit 30 and thereby the distance between the grinding head 21 and the knives Kn.1, Kn.2, ... to be ground can be adjusted by changing the distance between the foot 27 and the upper transversal beams 28.1, 28.2. This adjustment can be performed for knives held by the knife holder as well as for knives mounted on board of a harvester. For changing this distance a vertical adjusting device 14 with a handle can manually be operated, cf. Fig. 2 and Fig. 5. It is also possible that a positioning motor helps to adjust the vertical distance between the shaft 2 and a knife.

In addition the shaft 2 and thereby the grinding discs 1.1, 1.2, ... can horizontally be moved with respect to the grinding head holder 3.1, 3.2, 33.1, 33.2 such that the horizontal distance between the grinding discs 1.1, 1.2, ... and a knife Kn.1, Kn.2, ... to be ground can be changed. For changing this horizontal distance the grinding unit 30 comprises a horizontal adjustment device 9, cf. Fig. 1 and Fig. 4. This horizontal adjustment device 9 comprises
- a handle 36 which is rigidly mounted on an inner sleeve,
- an outer sleeve with a helical aperture, and
- a pin connected with the inner sleeve and engaging the helical aperture of the outer sleeve.

The inner sleeve with the handle 36 is connected with the shaft 2. The outer sleeve with the helical aperture is rigidly connected with the grinding head holder member 3.2. Rotating the handle 36 causes the pin to move along the helical aperture in the outer sleeve. This movement causes the shaft 2 to perform a linear movement along the shaft axis with respect to the knives Kn.1, Kn.2, ... to be ground. The grinding discs 1.1, 1.2, ... are mounted on the shaft 2 and are therefore also moved with respect to the knives Kn.1, Kn.2, ... to be ground. It is also possible that a positioning motor helps to move the shaft 2 parallel to the shaft axis.

As already mentioned Fig. 1 to Fig. 3 show the grinding device of the embodiment in the off-board operating mode. In this mode those knives can be ground which are held by the knife holder, e.g. as the knives to be ground cannot be reached by the grinding unit 30 while the knives are mounted on board of the harvester or before a knife is mounted on board of the harvester. In Fig. 1 to Fig. 3 the knives to be ground and kept by the knife holder are omitted.

In the off-board operating mode the grinding unit 30 is placed on the frame 20 and thereby above the knife holder. Preferably the grinding unit 30 is temporarily locked at the frame 20. The locking connection can be released again. This frame 20 comprises the knife holder which can simultaneously hold and fix in a vertical position a sequence of several (in the embodiment maximal ten) knives Kn.1, Kn.2, ... to be ground. The knife holder comprises a sequence of ten knife holder plate pairs 13.1, 13.2, ... Every pair comprises two parallel vertical plates. A knife can vertically be positioned between the opposing plates of a pair 13.1, 13.2, .... Two opposing plates of a pair prevent a lateral movement of the knife, i.e. a movement of the knife in a direction parallel to the shaft 2 of the grinding head 21 and thereby away from a grinding disc 1.1, 1.2, ....

In the embodiment a movement of a knife Kn.1, Kn.2, ... kept by the knife holder in a direction perpendicular to the shaft 2, e.g. downwards or angularly or horizontally, is prevented as follows: A hole pattern is inserted into every knife holder plate, cf. Fig. 1 and Fig. 2. Every hole pattern comprises a plurality of holes. Several pins 15.1, 15.2, ... can be shifted through corresponding holes of the plates of the ten knife holder pairs 13.1, 13.2, .... These pins 15.1, 15.2 carry the ten knives from below. The knives Kn.1, Kn.2, ... to be ground are carried and kept by these pins 15.1, 15.2, ... and by the force of gravity. A knife holder pair 13.1, 13.2, ...., the pins 15.1, 15.2, ..., and a grinding disc 1.1, 1.2, .... above the knife keep the knife in a fixed position with respect to the grinding head holder 3.1, 3.2, 33.1, 33.2 such that the rotated and moved grinding disc 1.1, 1.2, ... touches and sharpens the cutting edge of this knife Kn.1, Kn.2, ... and the knife cannot move away in any direction. Thanks to the hole patterns and the pins 15.1, 15.2, ... the knife holder can subsequently carry knives with different shapes. It is also possible that the grinding device is first moved to a first harvester and the grinding unit 30 is placed on the cutting assembly of the first harvester and grinds knives of the first harvester. Later the grinding device is moved to a second harvester and the same grinding unit 30 grinds knives of the second harvester.

The knife holder with the holder plates 13.1, 13.2, ...is rigidly mounted on a chassis 16. This chassis 16 comprises
- four vertical beams,
- four horizontal enforcing beams, and
- four ground-engaging wheels 10.1, 10.2, ... mounted at the lower ends of the vertical beams.

Every ground-engaging wheel 10.1, 10.2, ... is provided with a fixing brake. When being activated, this fixing brake can inhibit a rotation of the assigned wheel. Thanks to the ground-engaging wheels 10.1, 10.2, ... the frame 20 and thereby the entire grinding device can be moved over ground, e.g. can first be moved to an agricultural harvester for taking the knife, can subsequently be moved to a source for hydraulic fluid, and can temporarily be locked at a selected position on ground by activating the fixing brakes.

In the off-board operating mode the grinding device operates as follows:
- The operator places the maximal ten knives to be ground in the knife holder. While the knives Kn.1, Kn.2, ... are inserted between the plate pairs 13.1, 13.2, ... and are fixed, the grinding unit 30 is preferably removed from the frame 20. Every knife Kn.1, Kn.2, ... is laterally kept by a knife holder pair 13.1, 13.2, ... of plates and is supported from below by several pins 15.1, 15.2, ... Preferably the operator places the knives Kn.1, Kn.2, ... between the pairs 13.1, 13.2, ... and above the pins 15.1, 15.2, ... such that all cutting edges are substantially parallel to the slots 4.1, 4.2, ...
- The operator places the grinding unit 30 on the frame 20 carrying the knives.
- The operator adjusts the grinding unit 30 with respect to the knives kept by the frame 20 by using the adjustment devices 9, 14.
- The operator locks the grinding unit 30.
- The operator connects the connectors 11.1, 11.2 by means of hoses with a source for pressurized fluid.
- The operator switches on the hydraulic motors 7.1, 7.2.
- The shaft 2 is rotated and automatically performs several oscillating movements along the slots 4.1, 4.2.
- In one implementation a counter counts the number of oscillating movements of the shaft 2 along the slots 4.1, 4.2. In a further implementation the operator counts the movement number.
- After the shaft 2 has performed the required number of movements along the slots 4.1, 4.2, the hydraulic motors 7.1, 7.2 are switched off - either triggered automatically by the counter or manually by the operator. Preferably the shaft 2 remains in a position adjacent to the upper end of the slots 4.1, 4.2.
- The operator takes the ground knives Kn.1, Kn.2, ... out of the knife holder.

The grinding unit 30 can be disconnected from the frame 20. An operator can carry the disconnected grinding unit 30 to a cutting assembly 22 by means of two apertures 8.1, 8.2 serving as handles. These handles 8.1, 8.2 are connected with the grinding head holder members 3.1, 3.2.

Fig. 4 and Fig. 5 show the grinding device in the on-board operating mode. The grinding unit 30 has been disconnected from the frame 20 and is placed on the cutting assembly 22 of an agricultural loader wagon. For sake of clarity Fig. 4 only shows one grinding disc 1.10.

This cutting assembly 22 comprises a sequence of knives Kn.1, Kn.2, .... While the loader wagon is moved over an agricultural field, the knives Kn.1, Kn.2, ... are in a cutting position and engage from below into a feeding channel. A conveying rotor (not shown) conveys picked-up or otherwise received crop material through this feeding channel and presses the conveyed crop material through the gaps between two adjacent knives of the cutting assembly 22.

In the situation shown in Fig. 4 and Fig. 5 the loader wagon is in a workshop. For performing the grinding operation and further maintenance operations and for taking out a knife out of the cutting assembly 22, the cutting assembly 22 is first lowered down such that the knives do not longer engage into the feeding channel and do no longer cooperate with the conveying rotor. Afterwards the cutting assembly 22 is shifted laterally, i.e. perpendicular to the travelling direction of the loader wagon and to the conveying direction of crop material, into a maintenance position - like the drawer of a cupboard. Fig. 4 and Fig. 5 show the cutting assembly 22 in such a lateral maintenance position. Fig. 5 further shows the horizontal rotating axis Ax around which the knives Kn.1, Kn.2, ... can be rotated between the cutting position and the lowered position. Several springs Sp.1, Sp.2, ... tend to keep the knives Kn.1, Kn.2, ... in the cutting position. In Fig. 4 and Fig. 5 the knives are kept in a maintenance position against the force of these springs. It is also possible that a hydraulic actuator can moves the knives via a shaft and several levers.

As can best be seen in Fig. 5, the foot 27 rests on protrusions Pr.1, Pr.2, ... of the knives Kn.1, Kn.2, ... when the grinding device is used in the on-board operating mode. The grinding head 21 can horizontally be adjusted with respect to the knives Kn.1, Kn.2, ... by the adjustment device 9 and can vertically be adjusted by the adjustment device 14. When grinding the knives Kn.1, Kn.2, ..., the shaft 2 is rotated. In addition the rotated shaft 2 is moved with respect to the grinding head holder 3.1, 3.2, 33.1, 33.2 along the slots 4.1 and 4.2 in that way which has been described above for the off-board operating mode.

In the embodiment the cutting assembly 22 comprises more than ten knives. Therefore the grinding unit 30 is subsequently placed in different positions on the cutting assembly 22. In every position the grinding unit 30 simultaneously grinds ten adjacent knives of the cutting assembly 22 being in the maintenance position.

In the on-board operating mode the grinding device operates as follows:
- The operator moves the grinding device with the grinding unit 30 resting on the frame 20 in the vicinity of a harvester wherein the cutting assembly 22 of this harvester is in the lateral maintenance position.
- The operator disconnects the grinding unit 30 from the frame 20, grasps the handles 8.1, 8.2, carries the disconnected grinding unit 30 to the harvester, and places the grinding unit 30 on the cutting assembly 22.
- The operator adjusts the grinding unit 30 with respect to the knives Kn.1, Kn.2, ... of the cutting assembly 22.
- The operator connects the connectors 11.1, 11.2 with a hydraulic source, preferably being on board of a tractor pulling the harvester.
- The operator switches on the motors 7.1, 7.2.
- After the shaft 2 has performed the required number of movements, the hydraulic motors 7.1, 7.2 are switched off again.
- The operator places the grinding unit 30 onto a further sequence of ten knives to be ground and let the grinding head 21 being moved and grinding the ten knives.
- When all knives of the loader wagon are ground, the operator places the grinding unit 30 again on the frame 20, locks the grinding unit 30, and moves away the entire grinding device.
- The cutting assembly 22 is moved back into the cutting position.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1.1, 1.2, ..., 1.10 | grinding discs of the grinding head 21, rigidly mounted on the shaft 2 |
| 2 | shaft on which the grinding discs 1.1, 1.2, ..., 1.10 are mounted, protrudes through the slots 4.1, 4.2, is rotated by the motor 7.2 and is shifted by the motor 7.1 |
| 3.1, 3.2 | grinding head holder members, hold and guide the rotated and shifted shaft 2, comprise the slots 4.1 and 4.2, rigidly connected by the traversal beams 33.1, 33.2 |
| 4.1, 4.2 | curved longitudinal slots cut in the grinding head holder members 3.1, 3.2, provide the shaft guiding surfaces |
| 5.1, 5.2 | curved serrated upper edges of the grinding head holder members 3.1, 3.2 into which the sprocket wheels 18.1, 18.2 engage |
| 6.1 | rigid fluid line, connects the connector 11.1 with the hose 25.1 |
| 6.2 | rigid fluid line, connects the connector 11.2 with the hose 25.2 |
| 7.1 | hydraulic motor for rotating the traversal bar 17, thereby moving the shaft 2 along the trajectory defined by the slots 4.1, 4.2, mounted on the traversal bar 17 |
| 7.2 | hydraulic motor for rotating the shaft 2, mounted on one end of the shaft 2 |
| 8.1, 8.2 | handles for carrying the portable grinding unit 30 |
| 9 | adjusting device for horizontally adjusting the shaft 2 with respect to the knives Kn.1, Kn.2, ... in a direction parallel to the shaft axis, comprises the handle 36 |
| 10.1, 10.2, ... | ground engaging wheels of the chassis 16 |
| 11.1 | connector for the fluid line 6.1 |
| 11.2 | connector for the fluid line 6.2 |
| 12 | hydraulic distributor, connects the hoses 25.1, 25.2 with the hydraulic motors 7.1, 7.2 |
| 13.1, 13.2, ... | knife holder plate pairs with hole patterns for the pins 15.1, 15.2, ... |
| 14 | adjustment device for adjusting the shaft 2 in a direction perpendicular to the shaft axis, enables adjusting the vertical distance between the foot 27 and the beams 28.1, 28.2. |
| 15.1, 15.2 | pins which can be guided through the holes in the knife holder plates 13.1, 13.2, ... |
| 16 | chassis with the ground-engaging wheels 10.1, 10.2, ..., belong to the frame 20 |
| 17 | traversal bar, carries the sprocket wheels 18.1, 18.2 and the motor 7.1, serves as the wheel shaft |
| 18.1, 18.2 | sprocket wheels mounted on the traversal bar 17, engage the serrated edges 5.1, 5.2 |
| 19.1 | rigid end piece of the hose 25.1, can be connected with the end piece 32.1 of the line 6.1 |
| 19.2 | rigid end piece of the hose 25.2, can be connected with end piece 32.2 of the line 6.2 |
| 20 | frame comprising the knife holder plates 13.1, 13.2 and the chassis 16 |
| 21 | grinding head comprising the shaft 2 and the grinding discs 1.1, 1.2, ... |
| 22 | cutting assembly with the knives Kn.1, Kn.2 to be ground, ..., mounted on board of a harvester |
| 24.1, 24.2 | mechanical coupling elements, couple the rotated traversal bar 17 with the shaft 2 |
| 25.1 | hose, connects the fluid line 6.1 with the hydraulic distributor 12, can be connected with the line 6.1 by the end pieces 19.1 and 32.1 |
| 25.2 | hose, connects the fluid line 6.2 with the hydraulic distributor 12, can be connected with the line 6.2 by the end pieces 19.2 and 32.2 |
| 26.1, 26.2 | rigid fluid lines, connect the hydraulic distributor 12 with the hydraulic motor 7.1 on the bar 17 |
| 27 | L-shaped lower transversal beam of the vertical adjustment device 14, serves as the foot of the grinding unit 30 |
| 28.1, 28.2 | upper transversal beams of the vertical adjustment device 14, rigidly connected with the knife holder plate pairs 13.1, 13.2, ... |
| 29.1, 29.2 | rigid fluid lines, connect the hydraulic distributor 12 with the hydraulic motor 7.2 on the shaft 2 |
| 30 | grinding unit, comprises the grinding head 21, the grinding head holder members 3.1, 3.2, the drives 7.1, 7.2, and the transmission member 17, 24.1, 24.2 |
| 31 | pivotal cover for the rigid fluid lines 6.1, 6.2 |
| 32.1 | rigid end piece of the rigid fluid line 6.1, can be connected with the end piece 19.1 of the hose 25.1 |
| 32.2 | rigid end piece of the rigid fluid line 6.2, can be connected with the end piece 19.2 of the hose 25.2 |
| 33.1, 33.2 | transversal beams of the grinding head holder, rigidly connect the grinding head holder members 3.1, 3.2 with each other |
| 34.1, 34.2 | trajectory reducing element, can be inserted into a slot 4.1, 4.2 |
| 35 | pivotal cover for the grinding discs 1.1, 1.2, ... of the grinding head 21 |
| 36 | handle of the adjustment device 9 |
| 37.1, 37.2 | guiding surfaces provided by the slots 4.1, 4.2 |
| Ax | rotating axis around which the knives Kn.1, ... can be pivoted between a cutting position and a lowered non-cutting position |
| CE.1, ..., CE.10 | cutting edges of the knives Kn.1, ..., are sharpened by the grinding discs 1.1, 1.2, ... |
| Kn.1, Kn.2, ..., Kn.10 | knives to be ground, comprise the cutting edges CE.1, ... , CE.10, belong to the cutting assembly 22, can be inserted into the knife holder |
| Pr.1, ..., Pr.10 | rear protrusions of the knives Kn.1, ... Kn.10, can carry the food 27 |
| Sp.1, ..., Sp.10 | springs for keeping the knives Kn.1, ... Kn.10 in the cutting position |

## Claims

1. Grinding unit (30) for grinding at least one knife (Kn.1, Kn.2, ...),
wherein the grinding unit (30) comprises
- a grinding head (21),
- a grinding head holder (3.1, 3.2, 33.1, 33.2) holding the grinding head (21),
- a grinding head rotating drive (7.2),
- a grinding head shifting drive (7.1), and
- a guiding assembly (4.1, 4.2, 5.1, 5.2),
wherein the grinding head (21) comprises
- a grinding head shaft (2) extending along a grinding head shaft axis and
- at least one grinding body (1.1, 1.2, ...) rigidly mounted on the shaft (2),
wherein the or every grinding body (1.1, 1.2, ...) is arranged to touch at least one knife (Kn.1, Kn.2, ...) to be ground,
wherein the grinding head rotating drive (7.2) is arranged to rotate the grinding head shaft (2),
thereby causing the or every grinding body (1.1, 1.2, ...) to be rotated on the grinding head shaft (2),
wherein the grinding head shifting drive (7.1) is arranged to shift the rotated grinding head shaft (2) with respect to the head holder (3.1, 3.2, 33.1, 33.2), thereby causing the rotated grinding head (21) to be shifted in a direction perpendicular to the grinding head shaft axis, and
wherein the guiding assembly (4.1, 4.2, 5.1, 5.2) is arranged to guide the shifted grinding head (21) along a given trajectory,
**characterized in that**
the guiding assembly (4.1, 4.2, 5.1, 5.2) provides at least one grinding head shaft guiding surface (37.1, 37.2),
the guiding assembly (4.1, 4.2, 5.1, 5.2) comprises at least one longitudinal guiding slot (4.1, 4.2),
wherein the or every guiding slot (4.1, 4.2)
- is inserted into the grinding head holder (3.1, 3.2, 33.1, 33.2) and
- provides the or at least one grinding head shaft guiding surface (37.1, 37.2) and
wherein the grinding head shaft (2) protrudes through the or each guiding slot (4.1, 4.2) inserted into the grinding head holder (3.1, 3.2, 33.1, 33.2).
wherein the rotated and shifted grinding head shaft (2) stays in contact with the or at least one grinding head shaft guiding surface (37.1, 37.2) and
wherein the or at least one grinding head shaft guiding surface (37.1, 37.2) guides the rotated and shifted grinding head shaft (2) with respect to the grinding head holder (3.1, 3.2, 33.1, 33.2) along the given trajectory.

2. Grinding unit (30) according to claim 1,
**characterized in that**
the grinding head holder (3.1, 3.2, 33.1, 33.2) comprises two grinding head holder members (3.1, 3.2) providing at least two parallel shaft guiding surfaces (37.1, 37.2),
wherein the or every grinding body (1.1, 1.2, ...) is positioned between the grinding head holder members (3.1, 3.2) and
wherein both shaft guiding surfaces (37.1, 37.2) guide the contacted and shifted shaft (2).

3. Grinding unit (30) according to claim 2,
**characterized in that**
the guiding assembly (4.1, 4.2, 5.1, 5.2) comprises two longitudinal guiding slots (4.1, 4.2) providing the two shaft guiding surfaces (37.1, 37.2),
wherein the respective guiding slot (4.1, 4.2) is inserted into one grinding head holder member (3.1, 3.2).

4. Grinding unit (30) according to one of the preceding claims,
**characterized in that**
the or at least one guiding surface is provided by the grinding head holder (3.1, 3.2, 33.1, 33.2).

5. Grinding unit (30) according to claim 4,
**characterized in that**
the rotated and shifted shaft (2) stays in contact with at least one edge of the grinding head holder (3.1, 3.2, 33.1, 33.2),
wherein the or every contacted edge serves as the or one shaft guiding surface (37.1, 37.2).

6. Grinding unit (30) according to one of the preceding claims,
**characterized in that**
the rotated and shifted shaft (2) rests on the or at least one shaft guiding surface (37.1, 37.2).

7. Grinding unit (30) according to one of the preceding claims,
**characterized in that**
the guiding assembly (4.1, 4.2, 5.1, 5.2) comprises at least one trajectory reducing element (34.1, 34.2),
wherein the or every trajectory reducing element (34.1, 34.2) is applicable to and removable from the or one shaft guiding surface (37.1, 37.2),
thereby selectively providing a larger or a shorter shaft guiding surface (37.1, 37.2).

8. Grinding unit (30) according to claim 7,
**characterized in that**
the guiding assembly (4.1, 4.2, 5.1, 5.2) comprises at least one longitudinal guiding slot (4.1, 4.2) providing the or at least one shaft guiding surface (37.1, 37.2), and
wherein the or every trajectory reducing element (34.1, 34.2) is insertable into and removable from the or one guiding slot (4.1, 4.2).

9. Grinding unit (30) according to one of the preceding claims,
**characterized in that**
the grinding unit (30) comprises a reversing element (12) and
the grinding head shifting drive (7.1) is arranged to shift the shaft (2) with respect to the grinding head holder (3.1, 3.2, 33.1, 33.2) in two opposite directions perpendicular to the shaft axis,
thereby causing an oscillating movement of the shaft (2) staying in contact with the or one shaft guiding surface (37.1, 37.2),
wherein the reversing element (12) is arranged to trigger a direction reversing of the shaft movement caused by the grinding head shifting drive (7.1).

10. Grinding unit (30) according to claim 9,
**characterized in that**
the grinding head shifting drive (7.1) comprises a hydraulic motor and
the reversing device (12) comprises a pressure sequence valve or oscillating valve.

11. Grinding unit (30) according to one of the preceding claims,
**characterized in that**
the grinding unit (30) comprises
- a movable transmission member (17, 18.1, 18.2) and
- a mechanical coupling member (24.1, 24.2),
wherein the grinding head shifting drive (7.1) is arranged to move the movable transmission member (17, 18.1, 18.2) with respect to the grinding head holder (3.1, 3.2, 33.1, 33.2) and
wherein the mechanically coupling element (24.1, 24.2) transfers
- a movement of the movable transmission member (17, 18.1, 18.2) onto
- the guided and rotated shaft (2),
thereby shifting the shaft (2) with respect to the grinding head holder (3.1, 3.2, 33.1, 33.2) in a direction perpendicular to the shaft axis.

12. Grinding unit (30) according to claim 11,
**characterized in that**
the grinding head holder (3.1, 3.2, 33.1, 33.2) comprises at least one serrated edge (5.1, 5.2) and
the movable transmission member (17, 18.1, 18.2) comprises
- a wheel shaft (17) and
- at least one sprocket wheel (18.1, 18.2) mounted on the wheel shaft (17),
wherein the or every sprocket wheel (18.1, 18.2) engages the or one serrated edge (5.1, 5.2),
wherein the grinding head shifting drive (7.1) is arranged to rotate the wheel shaft (17),
thereby causing
- the or every engaging sprocket wheel (18.1, 18.2) to move along the or one serrated edge (5.1, 5.2) and
- the wheel shaft (17) to move with respect to the grinding head holder (3.1, 3.2, 33.1, 33.2), and
wherein the mechanical coupling member (17, 24.1, 24.2) transfers
- a movement of the rotated wheel shaft (17) onto
- the shaft (2) of the grinding head (21),
thereby shifting the shaft (2) with respect to the grinding head holder (3.1, 3.2, 33.1, 33.2) perpendicular to the shaft axis.

13. Grinding unit (30) according to claim 11 or claim 12,
**characterized in that**
the grinding head shifting drive (7.1)
- is mechanically connected with the movable transmission member (17, 18.1, 18.2) and
- keeps its position relative to the movable transmission member (17, 18.1, 18.2) while moving the movable transmission member (17, 18.1, 18.2).

14. Grinding unit (30) according to one of the preceding claims,
**characterized in that**
both drives (7.1, 7.2) are positioned on the same side of the grinding head (21) when seen in a direction perpendicular to the shaft axis.

15. Grinding unit (30) according to one of the preceding claims,
**characterized in that**
the grinding unit (30) is arranged to move and to guide a grinding assembly along the given trajectory with respect to the grinding head holder (3.1, 3.2, 33.1, 33.2), wherein the grinding assembly comprises
- the grinding head (21),
- the grinding head rotating drive (7.2),
- the grinding head shifting drive (7.1), and
- a supply device (12, 26.1, 26.2, 29.1, 29.2) for supplying the drives (7.1, 7.2).

16. Grinding unit (30) according to claim 15,
**characterized in that**
both grinding head drives (7.1, 7.2) are implemented as hydraulic motors and
the grinding assembly further comprises a hydraulic distributor (12),
wherein the hydraulic distributor (12)
- is in fluid connection with both drives (7.1, 7.2) and
- is connected or connectable with a hydraulic fluid source.

17. Grinding unit (30) according to one of the preceding claims,
**characterized in that**
the grinding head (21) comprises a sequence of grinding bodies (1.1, 1.2, ...), wherein the grinding bodies (1.1, 1.2, ...)
- are mounted on the shaft (2) and
- are arranged to touch a sequence of knives (Kn.1, Kn.2, ...) to be ground.

18. Grinding unit (30) according to one of the preceding claims,
**characterized in that**
the grinding head holder (3.1, 3.2, 33.1, 33.2) rests on a foot (27),
wherein the distance between the grinding head holder (3.1, 3.2, 33.1, 33.2) and the foot (27) is changeable.

19. Grinding device comprising
- a grinding unit (30) according to one of the preceding claims and
- a knife holder (13.1, 13.2, ...),
wherein the grinding head holder (3.1, 3.2, 33.1, 33.2) of the grinding unit (30) is mountable at the knife holder (13.1, 13.2, ...) and
wherein the knife holder (13.1, 13.2, ...) is arranged to hold at least one knife (Kn.1, Kn.2, ...) to be ground.

20. Usage of a grinding unit (30) according to one of the claims 1 to 18 for grinding at least one knife (Kn.1, Kn.2, ...) of a vehicle, in particular of an agricultural harvester.

21. Vehicle, in particular agricultural harvester, comprising
- a cutting assembly (22) and
- at least temporarily grinding unit (30) according to one of the claims 1 to 18, wherein the grinding unit (30) is releasably mounted on the cutting assembly (22).

## Patentansprüche

1. Schleifeinheit (30) zum Schleifen mindestens eines Messers (Kn.1, Kn.2, ...), wobei die Schleifeinheit (30) das Folgende aufweist:
- einen Schleifkopf (21),
- einen Schleifkopfhalter (3.1, 3.2, 33.1, 33.2), der den Schleifkopf (21) hält,
- einen Schleifkopfdrehantrieb (7.2),
- einen Schleifkopfverlagerungsantrieb (7.1), und
- eine Führungsanordnung (4.1, 4.2, 5.1, 5.2),
wobei der Schleifkopf (21) das Folgende aufweist:
- eine Schleifkopfwelle (2), die sich entlang einer Schleifkopfwellenachse erstreckt, und
- mindestens einen Schleifkörper (1.1, 1.2, ...), der fest auf der Welle (2) montiert ist,
wobei der oder jeder Schleifkörper (1.1, 1.2, ...) geeignet ausgebildet und/oder angeordnet ist, um mindestens ein zu schleifendes Messer (Kn.1, Kn.2, ...) zu berühren,
wobei der Schleifkopfdrehantrieb (7.2) geeignet ausgebildet und/oder angeordnet ist, um die Schleifkopfwelle (2) zu drehen,
wodurch bewirkt wird, dass der oder jeder Schleifkörper (1.1, 1.2, ...) auf der Schleifkopfwelle (2) gedreht wird,
wobei der Schleifkopfverlagerungsantrieb (7.1) geeignet ausgebildet und/oder angeordnet ist, um die gedrehte Schleifkopfwelle (2) relativ zu dem Schleifkopfhalter (3.1, 3.2, 33.1, 33.2) zu verlagern,
wodurch bewirkt wird, dass der gedrehte Schleifkopf (21) in einer Richtung senkrecht zu der Schleifkopfwellenachse verlagert wird, und
wobei die Führungsanordnung (4.1, 4.2, 5.1, 5.2) geeignet ausgebildet und/oder angeordnet ist, um den verlagerten Schleifkopf (21) entlang einer vorgegebenen Bewegungsbahn zu führen,
**dadurch gekennzeichnet, dass**
die Führungsanordnung (4.1, 4.2, 5.1, 5.2) mindestens eine Schleifkopfwellenführungsoberfläche (37.1, 37.2) bereitstellt,
die Führungsanordnung (4.1, 4.2, 5.1, 5.2) mindestens einen Längsführungsschlitz (4.1, 4.2) aufweist,
wobei der oder jeder Führungsschlitz (4.1, 4.2)
- in den Schleifkopfhalter (3.1, 3.2, 33.1, 33.2) eingebracht wird und
- die oder mindestens eine Schleifkopfwellenführungsoberfläche (37.1, 37.2) bereitstellt und
wobei die Schleifkopfwelle (2) durch den oder jeden in den Schleifkopfhalter (3.1, 3.2, 33.1, 33.2) eingebrachten Führungsschlitz (4.1, 4.2) ragt,
wobei die gedrehte und verlagerte Schleifkopfwelle (2) in Kontakt mit der oder mindestens einer Schleifkopfwellenführungsoberfläche (37.1, 37.2) verbleibt und
wobei die oder mindestens eine Schleifkopfwellenführungsoberfläche (37.1, 37.2) die gedrehte und verlagerte Schleifkopfwelle (2) relativ zu dem Schleifkopfhalter (3.1, 3.2, 33.1, 33.2) entlang der vorgegebenen Bewegungsbahn führt.

2. Schleifeinheit (30) nach Anspruch 1,
**dadurch gekennzeichnet, dass**
der Schleifkopfhalter (3.1, 3.2, 33.1, 33.2) zwei Schleifkopfhalterelemente (3.1, 3.2) aufweist, die mindestens zwei parallele Wellenführungsoberflächen (37.1, 37.2) bereitstellen,
wobei der oder jeder Schleifkörper (1.1, 1.2, ...) zwischen den Schleifkopfhalterelementen (3.1, 3.2) positioniert ist und
wobei beide Wellenführungsoberflächen (37.1, 37.2) die kontaktierte und verlagerte Welle (2) führen.

3. Schleifeinheit (30) nach Anspruch 2,
**dadurch gekennzeichnet, dass**
die Führungsanordnung (4.1, 4.2, 5.1, 5.2) zwei Längsführungsschlitze (4.1, 4.2) aufweist, die die zwei Wellenführungsoberflächen (37.1, 37.2) bereitstellen,
wobei der entsprechende Führungsschlitz (4.1, 4.2) in ein Schleifkopfhalterelement (3.1, 3.2) eingebracht wird.

4. Schleifeinheit (30) nach einem der vorhergehenden Ansprüche,
**dadurch gekennzeichnet, dass**
die oder mindestens eine Führungsoberfläche durch den Schleifkopfhalter (3.1, 3.2, 33.1, 33.2) bereitgestellt wird.

5. Schleifeinheit (30) nach Anspruch 4,
**dadurch gekennzeichnet, dass**
die gedrehte und verlagerte Welle (2) in Kontakt mit mindestens einer Kante des Schleifkopfhalters (3.1, 3.2, 33.1, 33.2) verbleibt,
wobei die oder jede kontaktierte Kante als die oder eine Wellenführungsoberfläche (37.1, 37.2) dient.

6. Schleifeinheit (30) nach einem der vorhergehenden Ansprüche,
**dadurch gekennzeichnet, dass**
die gedrehte und verlagerte Welle (2) auf der oder mindestens einer Wellenführungsoberfläche (37.1, 37.2) aufliegt.

7. Schleifeinheit (30) nach einem der vorhergehenden Ansprüche,
**dadurch gekennzeichnet, dass**
die Führungsanordnung (4.1, 4.2, 5.1, 5.2) mindestens ein Bewegungsbahnreduzierelement (34.1, 34.2) aufweist,
wobei das oder jedes Bewegungsbahnreduzierelement (34.1, 34.2) auf die oder eine Wellenführungsoberfläche (37.1, 37.2) aufbringbar und von dieser entfernbar ist,
wodurch wahlweise eine längere oder eine kürzere Wellenführungsoberfläche (37.1, 37.2) bereitgestellt wird.

8. Schleifeinheit (30) nach Anspruch 7,
**dadurch gekennzeichnet, dass**
die Führungsanordnung (4.1, 4.2, 5.1, 5.2) mindestens einen Längsführungsschlitz (4.1, 4.2) aufweist, der die oder mindestens eine Wellenführungsoberfläche (37.1, 37.2) bereitstellt, und
wobei das oder jedes Bewegungsbahnreduzierelement (34.1, 34.2) in den oder einen Führungsschlitz (4.1, 4.2) einbringbar und aus diesem entfernbar ist.

9. Schleifeinheit (30) nach einem der vorhergehenden Ansprüche,
**dadurch gekennzeichnet, dass**
die Schleifeinheit (30) ein Umkehrelement (12) aufweist und
der Schleifkopfverlagerungsantrieb (7.1) geeignet ausgebildet und/oder angeordnet ist, um die Welle (2) relativ zu dem Schleifkopfhalter (3.1, 3.2, 33.1, 33.2) in zwei entgegengesetzten Richtungen senkrecht zu der Wellenachse zu verlagern,
wodurch eine oszillierende Bewegung der Welle (2), die in Kontakt mit der oder einer Wellenführungsoberfläche (37.1, 37.2) verbleibt, bewirkt wird,
wobei das Umkehrelement (12) geeignet ausgebildet und/oder angeordnet ist, um eine Richtungsumkehr der Bewegung der Welle auszulösen, die durch den Schleifkopfverlagerungsantrieb (7.1) bewirkt wird.

10. Schleifeinheit (30) nach Anspruch 9,
**dadurch gekennzeichnet, dass**
der Schleifkopfverlagerungsantrieb (7.1) einen Hydraulikmotor und die Umkehrvorrichtung (12) ein Druckfolgeventil oder Folgeschaltventil oder ein oszillierendes Ventil aufweist.

11. Schleifeinheit (30) nach einem der vorhergehenden Ansprüche,
**dadurch gekennzeichnet, dass**
die Schleifeinheit (30) das Folgende aufweist:
- ein bewegliches Getriebeelement (17, 18.1, 18.2) und
- ein mechanisches Kopplungselement (24.1, 24.2),
wobei der Schleifkopfverlagerungsantrieb (7.1) geeignet ausgebildet und/oder angeordnet ist, um das bewegliche Getriebeelement (17, 18.1, 18.2) relativ zu dem Schleifkopfhalter (3.1, 3.2, 33.1, 33.2) zu bewegen, und
wobei das mechanische Kopplungselement (24.1, 24.2)
- eine Bewegung des beweglichen Getriebeelements (17, 18.1, 18.2) auf
- die geführte und gedrehte Welle (2)
überträgt,
wodurch die Welle (2) relativ zu dem Schleifkopfhalter (3.1, 3.2, 33.1, 33.2) in einer Richtung senkrecht zu der Wellenachse verlagert wird.

12. Schleifeinheit (30) nach Anspruch 11,
**dadurch gekennzeichnet, dass**
der Schleifkopfhalter (3.1, 3.2, 33.1, 33.2) mindestens eine verzahnte Kante (5.1, 5.2) aufweist und
das bewegliche Getriebeelement (17, 18.1, 18.2) das Folgende aufweist:
- eine Radwelle (17) und
- mindestens ein Kettenrad (18.1, 18.2), das auf der Radwelle (17) montiert ist,
wobei das oder jedes Kettenrad (18.1, 18.2) in die oder eine verzahnte Kante (5.1, 5.2) eingreift, wobei der Schleifkopfverlagerungsantrieb (7.1) geeignet ausgebildet und/oder angeordnet ist, um die Radwelle (17) zu verdrehen,
wodurch bewirkt wird, dass
- sich das oder jedes Kettenrad (18.1, 18.2) entlang der oder einer verzahnten Kante (5.1, 5.2) bewegt und
- sich die Radwelle (17) relativ zu dem Schleifkopfhalter (3.1, 3.2, 33.1, 33.2) bewegt, und
wobei das mechanische Kopplungselement (24.1, 24.2)
- eine Bewegung der gedrehten Radwelle (17) auf
- die Welle (2) des Schleifkopfs (21)
überträgt,
wodurch die Welle (2) relativ zu dem Schleifkopfhalter (3.1, 3.2, 33.1, 33.2) senkrecht zu der Wellenachse verlagert wird.

13. Schleifeinheit (30) nach Anspruch 11 oder 12,
**dadurch gekennzeichnet, dass**
der Schleifkopfverlagerungsantrieb (7.1)
- mit dem beweglichen Getriebeelement (17, 18.1, 18.2) mechanisch verbunden ist und
- seine Position relativ zu dem beweglichen Getriebeelement (17, 18.1, 18.2) beibehält, während das bewegliche Getriebeelement (17, 18.1, 18.2) bewegt wird.

14. Schleifeinheit (30) nach einem der vorhergehenden Ansprüche,
**dadurch gekennzeichnet, dass**
beide Antriebe (7.1, 7.2) auf der selben Seite des Schleifkopfs (21) positioniert sind, wenn man dies in einer senkrechten Richtung zu der Wellenachse betrachtet.

15. Schleifeinheit (30) nach einem der vorhergehenden Ansprüche,
**dadurch gekennzeichnet, dass**
die Schleifeinheit (30) geeignet ausgebildet und/oder angeordnet ist, um eine Schleifanordnung entlang der vorgegebenen Bewegungsbahn relativ zu dem Schleifkopfhalter (3.1, 3.2, 33.1, 33.2) zu bewegen und zu führen,
wobei die Schleifanordnung das Folgende aufweist:
- den Schleifkopf (21),
- den Schleifkopfdrehantrieb (7.2),
- den Schleifkopfverlagerungsantrieb (7.1), und
- eine Versorgungsvorrichtung (12, 26.1, 26.2, 29.1, 29.2) zum Versorgen der Antriebe (7.1, 7.2).

16. Schleifeinheit (30) nach Anspruch 15,
**dadurch gekennzeichnet, dass**
beide Schleifkopfantriebe (7.1, 7.2) als Hydraulikmotoren implementiert sind und die Schleifanordnung weiterhin einen Hydraulikverteiler (12) aufweist,
wobei der Hydraulikverteiler (12)
- sich in einer Fluidverbindung mit beiden Antrieben (7.1, 7.2) befindet und
- mit einer Hydraulikfluidquelle verbunden oder verbindbar ist.

17. Schleifeinheit (30) nach einem der vorhergehenden Ansprüche,
**dadurch gekennzeichnet, dass**
der Schleifkopf (21) eine Abfolge von Schleifkörpern (1.1, 1.2, ...) aufweist,
wobei die Schleifkörper (1.1, 1.2, ...)
- auf der Welle (2) montiert sind und
- geeignet ausgebildet und/oder angeordnet sind, um eine Abfolge von zu schleifenden Messern (Kn.1, Kn.2, ...) zu berühren.

18. Schleifeinheit (30) nach einem der vorhergehenden Ansprüche,
**dadurch gekennzeichnet, dass**
der Schleifkopfhalter (3.1, 3.2, 33.1, 33.2) auf einem Fuß (27) aufliegt,
wobei der Abstand zwischen dem Schleifkopfhalter (3.1, 3.2, 33.1, 33.2) und dem Fuß (27) veränderbar ist.

19. Schleifvorrichtung, mit
- einer Schleifeinheit (30) nach einem der vorhergehenden Ansprüche und
- einem Messerhalter (13.1, 13.2, ...),
wobei der Schleifkopfhalter (3.1, 3.2, 33.1, 33.2) der Schleifeinheit (30) an dem Messerhalter (13.1, 13.2, ...) montierbar ist und
wobei der Messerhalter (13.1, 13.2, ...) geeignet ausgebildet und/oder angeordnet ist, um mindestens ein zu schleifendes Messer (Kn.1, Kn.2, ...) zu halten.

20. Verwendung einer Schleifeinheit (30) nach einem der Ansprüche 1 bis 18 zum Schleifen mindestens eines Messers (Kn.1, Kn.2, ...) eines Fahrzeugs, insbesondere einer landwirtschaftlichen Erntemaschine.

21. Fahrzeug, insbesondere landwirtschaftliche Erntemaschine, mit
- einer Schneidanordnung (22) und
- zumindest vorübergehend einer Schleifeinheit (30) nach einem der Ansprüche 1 bis 18, wobei die Schleifeinheit (30) lösbar an der Schneidanordnung (20) montiert ist.

## Revendications

1. Unité d'affûtage (30) destinée à affûter au moins un couteau (Kn.1, Kn.2, ...),
dans laquelle l'unité d'affûtage (30) comprend
une tête de meulage (21),
un support de tête de meulage (3.1, 3.2, 33.1, 33.2) maintenant la tête de meulage (21),
un dispositif d'entraînement en rotation de tête de meulage (7.2),
un dispositif de déplacement de tête de meulage (7.1), et
un ensemble de guidage (4.1, 4.2, 5.1, 5.2),
dans laquelle la tête de meulage (21) comprend
un arbre de tête de meulage (2) s'étendant le long d'un axe d'arbre de tête de meulage et
au moins un corps de meule (1.1, 1.2, ...) monté de manière rigide sur l'arbre (2),
dans laquelle le ou chaque corps de meule (1.1, 1.2, ...) est agencé afin de toucher au moins un couteau (Kn.1, Kn.2, ...) à affûter,
dans laquelle le dispositif d'entraînement en rotation de tête de meulage (7.2) est agencé de manière à faire tourner l'arbre de tête de meulage (2),
entraînant ainsi en rotation le ou chaque corps de meule (1.1, 1.2, ...) sur l'arbre de tête de meulage (2),
dans laquelle le dispositif de déplacement de tête de meulage (7.1) est agencé de manière à faire glisser l'arbre de tête de meulage (2) entraîné en rotation par rapport au support de tête (3.1, 3.2, 33.1, 33.2),
provoquant ainsi le glissement de la tête de meulage (21) entraînée en rotation dans une direction perpendiculaire à l'axe d'arbre de tête de meulage, et
dans laquelle l'ensemble de guidage (4.1, 4.2, 5.1, 5.2) est agencé de manière à guider la tête de meulage (21) déplacée suivant une trajectoire donnée,
**caractérisée en ce que**
l'ensemble de guidage (4.1, 4.2, 5.1, 5.2) comporte au moins une surface de guidage d'arbre de tête de meulage (37.1, 37.2),
l'ensemble de guidage (4.1, 4.2, 5.1, 5.2) comprend au moins une fente de guidage longitudinale (4.1, 4.2),
dans laquelle la ou chaque fente de guidage (4.1, 4.2)
est insérée dans le support de tête de meulage (3.1, 3.2, 33.1, 33.2) et
comporte ou au moins une surface de guidage d'arbre de tête de meulage (37.1, 37.2) et
dans laquelle l'arbre de tête de meulage (2) s'étend à travers la ou chaque fente de guidage (4.1, 4.2) insérée dans le support de tête de meulage (3.1, 3.2, 33.1, 33.2),
dans laquelle l'arbre de tête de meulage (2) entraîné en rotation et déplacé reste en contact avec ou la au moins une surface de guidage d'arbre de tête de meulage (37.1, 37.2) et
dans laquelle la ou au moins une surface de guidage d'arbre de tête de meulage (37.1, 37.2) guide l'arbre de tête de meulage (2) entraîné en rotation et déplacé par rapport au support de tête de meulage (3.1, 3.2, 33.1, 33.2) suivant la trajectoire donnée.

2. Unité d'affûtage (30) selon la revendication 1,
**caractérisée en ce que**
le support de tête de meulage (3.1, 3.2, 33.1, 33.2) comprend deux éléments de support de tête de meulage (3.1, 3.2) formant au moins deux surfaces de guidage d'arbre parallèles (37.1, 37.2),
dans laquelle le ou chaque corps de meule (1.1, 1.2, ...) est positionné entre les éléments de support de tête de meulage (3.1, 3.2) et
dans laquelle les deux surfaces de guidage d'arbre (37.1, 37.2) guident l'arbre (2) mis en contact et déplacé.

3. Unité d'affûtage (30) selon la revendication 2,
**caractérisée en ce que**
l'ensemble de guidage (4.1, 4.2, 5.1, 5.2) comprend deux fentes de guidage longitudinales (4.1, 4.2) formant les deux surfaces de guidage d'arbre (37.1, 37.2),
dans laquelle la fente de guidage respective (4.1, 4.2) est insérée dans un élément de support de tête de meulage (3.1, 3.2).

4. Unité d'affûtage (30) selon l'une des revendications précédentes,
**caractérisée en ce que**
la ou au moins une surface de guidage est formée par le support de tête de meulage (3.1, 3.2, 33.1, 33.2).

5. Unité d'affûtage (30) selon la revendication 4,
**caractérisée en ce que**
l'arbre entraîné en rotation et déplacé (2) reste en contact avec au moins un bord du support de tête de meulage (3.1, 3.2, 33.1, 33.2),
dans laquelle le ou chaque bord mis en contact sert en tant que la ou une surface de guidage d'arbre (37.1, 37.2).

6. Unité d'affûtage (30) selon l'une des revendications précédentes,
**caractérisée en ce que**
l'arbre entraîné en rotation et déplacé (2) repose sur la ou au moins une surface de guidage d'arbre (37.1, 37.2).

7. Unité d'affûtage (30) selon l'une des revendications précédentes,
**caractérisée en ce que**
l'ensemble de guidage (4.1, 4.2, 5.1, 5.2) comprend au moins un élément de réduction de trajectoire (34.1, 34.2),
dans laquelle le ou chaque élément de réduction de trajectoire (34.1, 34.2) peut être appliqué sur la ou une surface de guidage d'arbre (37.1, 37.2) et retiré de cette dernière,
formant ainsi de manière sélective une surface de guidage d'arbre (37.1, 37.2) plus large ou plus étroite.

8. Unité d'affûtage (30) selon la revendication 7,
**caractérisée en ce que**
l'ensemble de guidage (4.1, 4.2, 5.1, 5.2) comprend au moins une fente de guidage longitudinale (4.1, 4.2) formant la ou au moins une surface de guidage d'arbre (37.1, 37.2), et
dans laquelle le ou chaque élément de réduction de trajectoire (34.1, 34.2) peut être inséré dans la ou une fente de guidage (4.1, 4.2) et retiré de cette dernière.

9. Unité d'affûtage (30) selon l'une des revendications précédentes,
**caractérisée en ce que**
l'unité d'affûtage (30) comprend un élément d'inversion (12) et
le dispositif de déplacement de tête de meulage (7.1) est agencé de manière à déplacer l'arbre (2) par rapport au support de tête de meulage (3.1, 3.2, 33.1, 33.2) dans deux directions opposées perpendiculaires à l'axe d'arbre,
entraînant ainsi un mouvement oscillant de l'arbre (2) restant en contact avec la ou une surface de guidage d'arbre (37.1, 37.2),
dans laquelle l'élément d'inversion (12) est agencé de manière à déclencher une inversion de direction du mouvement d'arbre provoqué par le dispositif de déplacement de tête de meulage (7.1).

10. Unité d'affûtage (30) selon la revendication 9,
**caractérisée en ce que**
le dispositif de déplacement de tête de meulage (7.1) comprend un moteur hydraulique et
le dispositif d'inversion (12) comprend une vanne de modulation de pression ou une vanne oscillante.

11. Unité d'affûtage (30) selon l'une des revendications précédentes,
**caractérisée en ce que**
l'unité d'affûtage (30) comprend
un élément de transmission mobile (17, 18.1, 18.2) et
un élément de couplage mécanique (24.1, 24.2),
dans laquelle le dispositif de déplacement de tête de meulage (7.1) est agencé de manière à déplacer l'élément de transmission mobile (17, 18.1, 18.2) par rapport au support de tête de meulage (3.1, 3.2, 33.1, 33.2) et
dans laquelle l'élément de couplage mécanique (24.1, 24.2) transfère
un mouvement de l'élément de transmission mobile (17, 18.1, 18.2) sur
l'arbre (2) guidé et entraîné en rotation,
déplaçant ainsi l'arbre (2) par rapport au support de tête de meulage (3.1, 3.2, 33.1, 33.2) dans une direction perpendiculaire à l'axe d'arbre.

12. Unité d'affûtage (30) selon la revendication 11,
**caractérisée en ce que**
le support de tête de meulage (3.1, 3.2, 33.1, 33.2) comprend au moins un bord strié (5.1, 5.2) et
l'élément de transmission mobile (17, 18.1, 18.2) comprend
un arbre de roue (17) et
au moins une roue dentée (18.1, 18.2) montée sur l'arbre de roue (17),
dans laquelle la ou chaque roue dentée (18.1, 18.2) se couple au ou à un premier bord strié (5.1, 5.2),
dans laquelle le dispositif de déplacement de tête de meulage (7.1) est agencé de manière à faire tourner l'arbre de roue (17),
provoquant ainsi
le déplacement de la ou de chaque roue dentée (18.1, 18.2) de couplage le long du ou d'un bord strié (5.1, 5.2) et
le déplacement de l'arbre de roue (17) par rapport au support de tête de meulage (3.1, 3.2, 33.1, 33.2), et
dans laquelle l'élément de couplage mécanique (17, 24.1, 24.2) transfère
un mouvement de l'arbre de roue (17) entraîné en rotation sur
l'arbre (2) de la tête de meulage (21),
déplaçant ainsi l'arbre (2) par rapport au support de tête de meulage (3.1, 3.2, 33.1, 33.2 (3.1, 3.2, 33.1, 33.2) perpendiculairement à l'axe d'arbre.

13. Unité d'affûtage (30) selon la revendication 11 ou 12,
**caractérisée en ce que**
le dispositif de déplacement de tête de meulage (7.1)
est couplé mécaniquement à l'élément de transmission mobile (17, 18.1, 18.2) et
conserve sa position par rapport à l'élément de transmission mobile (17, 18.1, 18.2) tout en déplaçant l'élément de transmission mobile (17, 18.1, 18.2).

14. Unité d'affûtage (30) selon l'une des revendications précédentes,
**caractérisée en ce que**
les deux dispositifs d'entraînement (7.1, 7.2) sont positionnés sur le même côté de la tête de meulage (21) lorsqu'ils sont vus dans une direction perpendiculaire à l'axe d'arbre.

15. Unité d'affûtage (30) selon l'une des revendications précédentes,
**caractérisée en ce que**
l'unité d'affûtage (30) est agencée de manière à déplacer et à guider un ensemble de meulage suivant la trajectoire donnée par rapport au support de tête de meulage (3.1, 3.2, 33.1, 33.2), dans laquelle l'ensemble de meulage comprend
la tête de meulage (21),
le dispositif d'entraînement en rotation de tête de meulage (7.2),
le dispositif de déplacement de tête de meulage (7.1), et
un dispositif d'alimentation (12, 26.1, 26.2, 29.1, 29.2) destiné à alimenter les dispositifs d'entraînement (7.1, 7.2).

16. Unité d'affûtage (30) selon la revendication 15,
**caractérisée en ce que**
les deux dispositifs d'entraînement de tête de meulage (7.1, 7.2) sont mises en œuvre par des moteurs hydrauliques et l'ensemble de meulage comprend, en outre, un distributeur hydraulique (12),
dans laquelle le distributeur hydraulique (12)
est en liaison fluidique avec les deux dispositifs d'entraînement (7.1, 7.2) et
est raccordé ou peut être raccordé à une source de fluide hydraulique.

17. Unité d'affûtage (30) selon l'une des revendications précédentes,
**caractérisée en ce que**
la tête de meulage (21) comprend une série de corps de meule (1.1, 1.2, ...), dans laquelle les corps de meule (1.1, 1.2, ...)
sont montés sur l'arbre (2) et
sont agencés de manière à toucher une série de couteaux (Kn.1, Kn.2, ...) à affûter.

18. Unité d'affûtage (30) selon l'une des revendications précédentes,
**caractérisée en ce que**
le support de tête de meulage (3.1, 3.2, 33.1, 33.2) repose sur un pied (27),
dans laquelle la distance entre le support de tête de meulage (3.1, 3.2, 33.1, 33.2) et le pied (27) peut être modifiée.

19. Dispositif d'affûtage comprenant :
une unité d'affûtage (30) selon l'une des revendications précédentes et
un support de couteau (13.1, 13.2, ...),
dans lequel le support de tête de meulage (3.1, 3.2, 33.1, 33.2) de l'unité d'affûtage (30) peut être monté au niveau du support de couteau (13.1, 13.2, ...) et
dans lequel le support de couteau (13.1, 13.2, ...) est agencé afin de maintenir au moins un couteau (Kn.1, Kn.2, ...) à affûter.

20. Utilisation d'une unité d'affûtage (30) selon l'une des revendications 1 à 18 afin d'affûter au moins un couteau (Kn.1, Kn.2, ...) d'un véhicule, en particulier, d'une moissonneuse agricole.

21. Véhicule, en particulier, moissonneuse agricole, comprenant :
un ensemble de coupe (22) et
au moins temporairement une unité de meulage (30) selon l'une des revendications 1 à 18, dans lequel l'unité d'affûtage (30) est montée de manière amovible sur l'ensemble de coupe (22).
